(19) Europäisches Patentamt
European Patent Office
Office européen des brevets

(11) Publication number: 0 102 209
A2

# (12) EUROPEAN PATENT APPLICATION

(21) Application number: 83304592.5

(22) Date of filing: 09.08.83

(51) Int. Cl.$^3$: C 08 J 7/04
B 05 D 5/12, B 32 B 27/08

(30) Priority: 01.09.82 US 413869

(43) Date of publication of application:
07.03.84 Bulletin 84/10

(84) Designated Contracting States:
BE DE FR GB IT NL

(71) Applicant: MOBIL OIL CORPORATION
150 East 42nd Street
New York New York 10017(US)

(72) Inventor: Touhsaent, Robert Edward
5 Dahlia Drive
Fairport New York 14450(US)

(72) Inventor: Steiner, Robert Henry
39 Winding Road
Rochester New York 14618(US)

(74) Representative: West, Alan Harry
Mobil Court 3 Clements Inn
London WC2A 2EB(GB)

## (54) A heat-sealable thermoplastic film structure with antistatic properties.

(57) A multilayer film structure is inhibited against the accumulation of static charge on the surfaces thereof by the inclusion in a buried primer layer thereof of a linear high molecular weight water-soluble quaternary ammonium chloride polymer.

EP 0 102 209 A2

# A HEAT-SEALABLE THERMOPLASTIC FILM STRUCTURE WITH ANTISTATIC PROPERTIES

The present invention relates to a heat-sealable thermoplastic film structure having utility as, for example, a packaging film.

It is known to coat thermoplastic films, such as nylon, polyester and polyolefin films such as polyethylene, polypropylene, polybutene and copolymers thereof with other layers in order to improve the properties of such films. For example, uncoated polyolefin films, such as polypropylene, have a high and narrow heat-sealing temperature range, and, especially in the case of oriented polypropylene, it exhibits a tendency to disorient and shrink when such sealing temperatures are applied to the surface thereof. It is therefore known to provide a polypropylene film with a coating composition which substantially lowers the minimum heat-seal temperature of the structure as well as substantially broadening the heat-seal range of the film product. This type of coating composition also imparts other beneficial attributes to the film product, such as, increased stiffness and good hot-slip characteristics. Unfortunately, however, such coatings are susceptible to the accumulation of static charges when the films are employed in high speed packaging machinery. This causes handling and transport problems in addition to the tendency of the film to attract and hold particulate debris, such as dust.

It is therefore an object of the present invention to provide a multi-layer film structure having a reduced tendency to accumulate and maintain a static charge on the surface thereof.

Accordingly, the present invention resides in a heat-sealable thermoplastic film structure comprising:

(a) a thermoplastic film substrate having

(b) a primer coating on at least one surface thereof, and

(c) a heat-sealable layer on coating (b);

wherein the primer coating contains an anti-static agent of a linear high molecular weight water-soluble quaternary ammonium chloride polymer having a homopolymeric molecular chain of repeating units of a formula selected from:

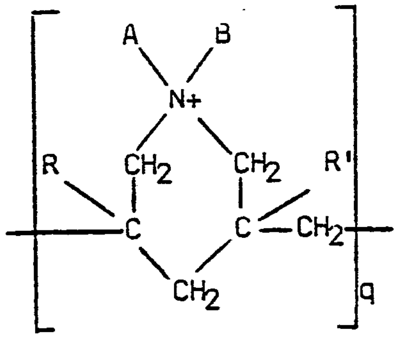

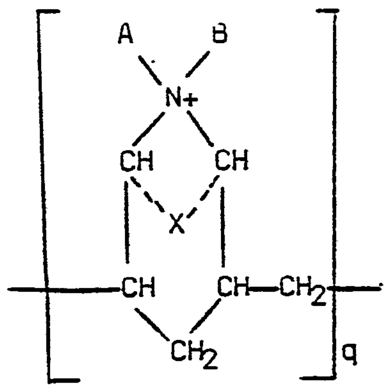

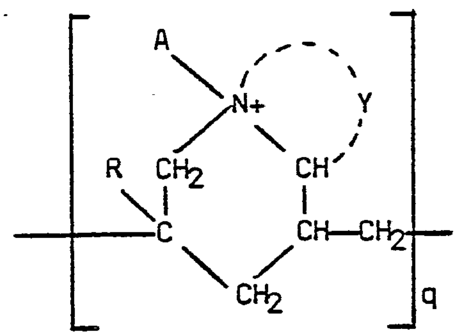

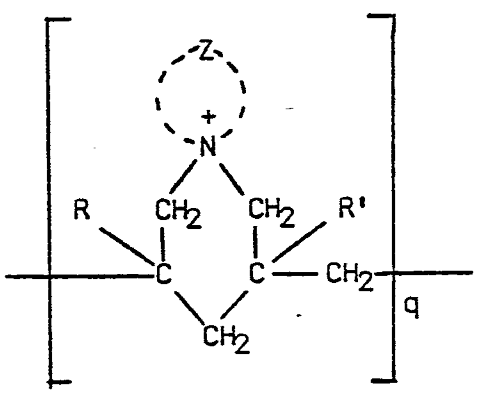

said polymer having an intrinsic viscosity in 0.1 N potassium chloride of between 0.5 and 2.0, and wherein,

A and B independently represent an alkyl or phenyl radical which may be substituted with a hydroxy, amido, carboloweralkoxy, loweralkoxy, phenoxy, naphthoxy, cyano, thioloweralkoxy, thiophenoxy, loweralkoyl, 5- and 6-membered cycloalkyl, or a tri-(loweralkyl)ammoniumloweralkyl group, or with, on the alkyl groupings only, a nitro group, or on the phenyl radicals only, a halogen atom; A and B taken together represent a group selected from

$$-CH_2-CH_2-,\quad -CH(CH_3)-CH(CH_3)-,$$
$$-CH{=}CH-CH{=}CH-,\quad -CH{=}CH-CH{=}N-$$

and

$$-CH{=}CH-N{=}CH-;$$

R and R' independently represent hydrogen, or a chloro, bromo, loweralkyl, or phenyl radical;

X represents a divalent radical of the formula

$$-CH_2-(O)_n-(CH_2)_m-;$$

Y represents a divalent radical of the formula

$$-(CH_2)_p-(O)_n-CH_2-;$$

Z represents a divalent radical of the formula

$$-(CH_2)_p-(O)_n-(CH_2)_2-$$

and

n is one of the numbers 0 and 1;

m is one of the numbers 1 and 2;

p is one of the numbers 2 and 3 and the symbol q is an integer representing the number of units in the molecular chain.

The heat-sealable thermoplastic film structure of the present invention may have from three or five discrete layers. The structure

will always comprise a thermoplastic film substrate, a primer coating on at least one surface of the substrate and a heat-sealable layer on the primer layer. It is also contemplated that a second primer layer be provided on the opposite surface of the film substrate to accommodate the bonding of another heat-sealable layer on said opposite surface.

The thermoplastic film substrate may be composed of a polyolefin such as polyethylene, polypropylene, polybutene, and copolymers and blends thereof (e.g. a propylene-ethylene copolymer with 2-6 weight % of the latter), nylon or a polyester. Particularly preferred, however, is biaxially oriented isotactic polypropylene film. The thickness of the substrate film may vary within a wide range, but is preferably from 0.25 to 2 mils (0.006 to 0.05 mm). Prior to the coating operation, the film is preferably subjected to a pretreatment utilizing, for example, corona discharge calculated to produce a film surface with a wetting tension of 37-43 dynes/cm.

Provided on the substrate film is a primer layer containing a particular class of quaternary ammonium chloride polymers which have been found effectively to inhibit and dissipate static charge accumulation which tends to form on the surface of a heat-sealable layer applied to the surface of the substrate despite the fact that the primer layer is located between the substrate film and the heat-sealable layer. The water-soluble quaternary ammonium polymers recited above are defined in detail, along with the process of preparing the same, in U.S. Patent No. 3,288,770. Particularly preferred species within the scope of the generic definition of these polymers are polydiallyldimethylammonium chloride, polydiallylpiperidinium chloride, polydiallylmorpholinium chloride and polydiallylpyrrolidinium chloride.

Any effective primer material may be used to bond the heat-sealable layer to the film substrate, but preferred are polyalkyleneimine primers, and epoxy primers. Suitable polyalkyleneimine primers are disclosed in U.S. Patent No. 3,230,135. The formula for polyalkyleneimine is believed to be as follows:

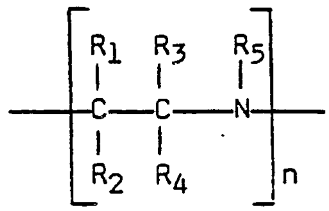

wherein $R_1$ through $R_4$ are each hydrogen or a lower alkyl group, $R_5$ is hydrogen, a lower alkyl group, a hydroxy substituted lower alkyl group, a lower alkyl alkoxy group, or a fatty acid residue formed from the reaction of a fatty acid with the imine and n is a whole number. The preferred polyalkyleneimine for use herein is polyethyleneimine and the preferred polyethyleneimine has a molecular weight in the range 25,000 to 50,000. A commercially available material within this description is Polymin M with a molecular weight of approximately 50,000 and a pH of 6.8. This is a product of BASF-Wyandotte Corporation.

In the present specification, the term "lower" in referring to alkyl, alkoxy and alkoyl substituents preferably designates a group containing 1 to 4 carbon atoms.

Suitable epoxy resin primer compositions comprise the reaction product of (a) an epoxy resin and (b) a curing agent. These materials are described in detail in U.S. Patent No. 4,214,039.

The first component of said reaction product is an epoxy resin which is defined as a glycidyl ether of polyhydroxy compounds. Typical polyhydroxy compounds which may be used include bisphenol A, ring substituted bisphenol A, resorcinol, hydroquinone, phenol-formaldehyde novolac resins, aliphatic diols, such as, ethylene glycol, propylene glycol, 1,4-butanediol, 1,6-hexanediol, glycerol, poly(oxyethylene)-glycol and the like. Preferred epoxy resins are those based upon the reaction product of epichlorohydrin and bisphenol A. These resins have an epoxy equivalent weight (EEW) ranging from 170 to 280. Materials within this definition are commercially available as EPON epoxy resins, for example, EPON 828.

The second component of the reaction product primer composition is a curing agent which is a water-soluble amino-modified acrylic polymer. The preferred material is described in U.S. Patent No. 3,719,629 and may be generically defined as an acidified aminoethylated interpolymer having pendent amino alkylate groups of the general formula:

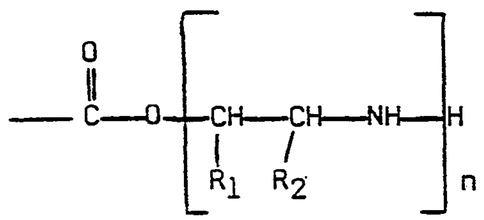

wherein $R_1$ and $R_2$ are hydrogen or lower alkyl radicals and the average value of n is in the range of 1.0-2.5.

This material is produced as described in the referenced patent, by polymerizing acrylate, methacrylate, styrene or other suitable monomers with sufficient methacrylic or acrylic acid to give a -COOH content of 7.5 to 12.5%. Solvent polymerization techniques are preferred. The polymer is then reacted with ethylene imine monomer and acidified with hydrochloric acid to render the polymer water soluble. A commercially available product sold by Dow Chemical Co. as XD-7080 comprises 50% resin, 43% ethyl ether of ethylene glycol and 7% water. This clear viscous solution is capable of being diluted infinitely with water. The resin has an amine hydrogen equivalent weight of 250.

The epoxy resin primer composition can be formed by emulsifying the selected epoxy resin in a solution of the acidified aminoethylated interpolymer by rapid stirring. The resultant dispersion is diluted with water to the desired concentration for coating purposes, usually from 2 to 25% by weight solids. When mixing the epoxy resin with the acidified aminoethylated interpolymer, it is generally preferred to use a stoichiometric equivalent balance of epoxy and amine groups. However, it has been found that the stoichiometric ratio may be varied over a wide range from 1 epoxy to 3 amine, through 3 epoxy to 1 amine and preferably from 1 epoxy to 2 amine, through 2 epoxy to 1 amine, without seriously affecting the product's usefulness as a primer coating.

The primer dispersion, be it the polyaklyleneimine or the epoxy resin reaction product, is applied by standard coating techniques. The primer layer must be deposited in an amount sufficient to create an effective bond between the substrate and the heat sealable layer. In general, the total solids concentration of the primer can be from 0.5% up to 25%. A preferred dry coating weight can range from 0.01 to 0.25 grams per 1,000 square inches (6452 $cm^2$) of film. After application of the primer layer the coated film is passed through a hot air oven to completely remove water and solvents present. Residence times of 1 to 6 seconds in an oven at 200° - 230°F (93-110°C) are usually sufficient to remove essentially all of the liquid phase. This primer coated substrate film may be subsequently wound into a roll for storage before top coating or it may be coated immediately thereafter by applying the heat sealable layer.

Among the preferred heat sealable layers are the acrylate polymer layer defined in U.S. Patent 3,753,769 and the vinylidene chloride interpolymer composition defined in U.S. Patent 4,058,649.

The acrylate heat sealable composition of U.S. Patent 3,753,769 is a composition consisting essentially of an interpolymer of (a) from 2 to 15 parts and preferably from 2.5 to 6 parts by weight of an alpha-beta monoethylenically unsaturated carboxylic acid selected from acrylic acid, methacrylic acid, and mixtures thereof, and (b) from 85 to 98 and preferably from 94 to 97.5 parts by weight of neutral monomer esters preferably comprising (1) methyl acrylate or ethyl acrylate and (2) methyl methacrylate. The interpolymer compositions are further characterized by preferably comprising from 30% to 55% by weight of methyl methacrylate when said alkyl acrylate is methyl acrylate and from 52.5% to 69% by weight of methyl methacrylate when said akyl acrylate is ethyl acrylate. This heat sealable composition can contain additives calculated to improve the physical properties thereof. For example, in order to impart "hot-slip" characteristics to the heat sealable layer inorganic materials such as colloidal silica may be included therein. Antiblocking materials such as waxes may also be included in the heat sealable layer.

The other preferred heat sealable layer, defined in U.S. Patent No. 4,058,649, is a vinylidene chloride interpolymer of at least 50% by weight of vinylidene chloride, a copolymerizable acid monomer such as methacrylic acid or a mixture of methacrylic acid and acrylic acid, which mixtures contain a predominance, i.e. 50% or more by weight of methacrylic acid, and a monomer such as an alkyl acrylate or methacrylate or acrylonitrile.

The effectiveness of the anti-static activity of the present coated film structures is measured on a device in which a film sample is mounted on an electrically shielded cabinet in which the environmental conditions of temperature and relative humidity are closely controlled. An electrical charge is impressed on the film surface by means of an electrical discharge source. The charge on the film surface is measured by means of an electrometer and recorded continuously on a chart recorder. The initial charge ($E_0$) in kilovolts is measured at the time the external charge is discontinued. Typically, polyolefin films exhibit an $E_0$ value in the range of 4 - 5 kilovolts. The impressed charge decays asymptotically at a rate indicative of the anti-static activity of the film. The time required for the $E_0$ value to decay by 50% is termed the static half-life (T 1/2) of the film. Measurement of the electrostatic charge is continued for three minutes at which time a final value ($E_{3'}$) is recorded. Generally, film with poor anti-static properties still exhibits a substantial $E_{3'}$ value, typically greater than 50% of $E_0$. The half-lives of such films are reported at greater than three minutes and generally these films would be unsatisfactory in packaging machine operations. Films exhibiting T 1/2 values in the range of 0.5 to 1.0 minutes at a relative humidity of 60% at 25°C are considered to be fair and may be useable under certain circumstances.

## Example

A 0.8 (0.02 mm) mil, corona discharge treated (40-42 dynes/cm) biaxially oriented polypropylene film is coated on both sides with the following layers:

I. on one side, using a 200 mesh gravure roll, the following aqueous primer is applied:

(a) 69.0 wt.% of the primer of Example 1 of U.S. Patent 4,214,039, i.e. the reaction product of the glycidyl ether of epichlorohydrin and bisphenol A and an acidified aminoethylated vinyl polymer having the following pendant groups

$$O{=}C{-}O{-}\left[CH_2CH_2NH{-}H\right]_n$$

(n=1.0-2.5), available as XD 7080 from Dow Chemical Co.

(b) 11.2 wt% polyethyleneimine (50,000 M.W.-pH6.8)

(c) 19.8 wt% polydiallyldimethylammonium chloride, obtainable as conductive polymer 261, Merck & Co.

The primer coated film is dried in a hot air oven at 220°F (104°C) with a dwell time of 5 seconds.

II. The primed film is coated on the opposite side with the primer of Example 1 of U.S. Patent 4,214,039. This coating is also dried at 220°F (104°C) with a dwell time of 5 seconds.

III. Primer coating I is top coated with the heat sealable acrylic formulation of Example I of U.S. Patent No. 3,753,769, i.e. an interpolymer of methyl methacrylate, methyl acrylate and methacrylic acid. The coating is approximately 0.6g/1000 $in^2$ (6452 $cm^2$).

IV. Primer coating II is top coated with a saran latex, which has a pH of 8.5 after adjustment with ammonia. The latex comprises an interpolymer of 88 wt% vinylidene chloride, 7 wt% methyl acrylate and 5 wt% acrylonitrile. To this latex is added carnauba wax (4 phr) and powdered talc (0.5 phr). This coating is dried at an oven temperature of 220°F (104°C) with a dwell time of 12 seconds. A coating weight of 2g/1000 $in^2$ (6452 $cm^2$) is obtained.

In testing the film structure of the foregoing example for the anti-static activity of the conductive polymer present in primer layer I, it is found to be excellent not only with respect to heat

sealable layer III of the structure but also, unexpectedly, excellent on the opposite, and much more remote, heat sealable layer IV of the film structure. This excellent anti-static effect is obtained without applying the material in or onto either of the heat sealable layers. This avoids the likelihood of creating an incompatible system between the heat sealable layer and the anti-static polymer which is water soluble. This incompatibility would pose the problems of introducing unwanted haze in the film and interference with the heat seal strength. The structure of the foregoing example when tested for heat seal strength of either like surface to like surface bonding or unlike surface bonding will be found to be at least as good as in the absence of the conductive polymer or not substantially worse.

It is to be understood that the conductive polymer should be present in the primer layer in an anti-static effective amount. Generally, this will be satisfied if the selected conductive polymer of the generic formula is present in the primer layer in from 1 to 80% by weight with a particular preference for a weight range of from 10 to 40% by weight.

The contemplated film structures need only be primer and heat seal coated on one side. When coated on both sides the primer can be identical or different depending upon the character of other subsequent layers. When the primer layer is a mixture of a polyalkyleneimine and epoxy resin, the mixture can be in any proportions. The film structure of the present invention can be used in a variety of wrapping and packaging systems, for example, in conventional form and fill systems for products such as snack foods and coffee.

CLAIMS:

1. A heat-sealable thermoplastic film structure comprising:
(a) a thermoplastic film substrate having
(b) a primer coating on at least one surface thereof, and
(c) a heat-sealable layer on coating (b); wherein the primer coating contains an antistatic agent of a linear water-soluble quaternary ammonium chloride polymer having a homopolymeric molecular chain of repeating units of a formula selected from:

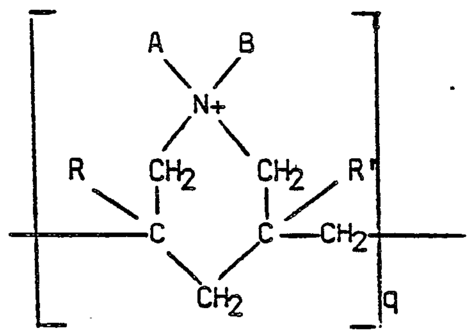

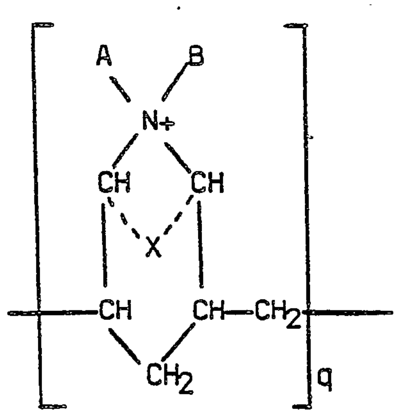

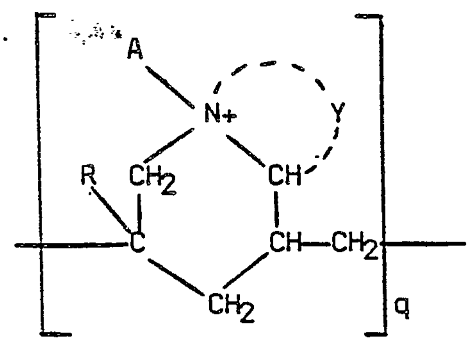

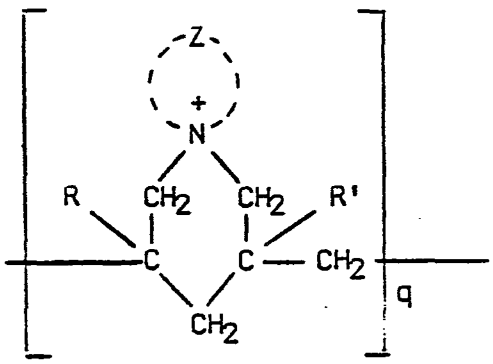

said polymer having an intrinsic viscosity in 0.1 N potassium chloride of at least between 0.5 and 2.0, and wherein
A and B independently represent an alkyl or phenyl radical which may be substituted with a hydroxy, amido, carboloweralkoxy, loweralkoxy, phenoxy, naphthoxy, cyano, thioloweralkoxy, thiophenoxy, loweralkoyl, 5- and 6-membered cycloalkyl, or a tri-(loweralkyl)ammoniumloweralkyl group, or with, on the alkyl grouping only, a nitro group, or, on the phenyl radical only, a halogen atom; A and B taken together represent a group selected from:

$-CH_2-CH_2-$, $-CH(CH_3)-CH(CH_3)-$,
$-CH{=}CH-CH{=}CH-$, $-CH{=}CH-CH{=}N-$

and

$-CH{=}CH-N{=}CH-$;

R and R' independently represent hydrogen or a chloro, bromo, loweralkyl, or phenyl radical;

X represents a divalent radical of the formula

$-CH_2-(O)_n-(CH_2)_m-$;

Y represents a divalent radical of the formula

$-(CH_2)_p-(O)_n-CH_2-$;

Z represents a divalent radical of the formula

$-(CH_2)_p-(O)_n-(CH_2)_2-$

and

n is one of the numbers 0 and 1;

m is one of the numbers 1 and 2;

p is one of the numbers 2 and 3 and the symbol q is an integer representing the number of units in the molecular chain.

2. The film structure of claim 1 wherein said substrate is a polyolefin, a polyester or a nylon.

3. The film structure of claim 1 wherein said substrate is a polyolefin.

4. The film structure of claim 1 wherein said substrate is polypropylene.

5. The film structure of any preceding claim wherein said primer coating is polyalkyleneimine or an epoxy resin.

6. The film structure of any preceding claim wherein said heat-sealable layer on coating (b) is on one or both sides of said substrate and is a layer of an acrylic polymer, a vinylidene chloride polymer or one of each.

7. The film structure of any preceding claim wherein said quaternary ammonium polymer is a polydiallyldimethylammonium chloride.

8. The film structure of claim 1 and including on one surface of the substrate one primer layer comprising an epoxy resin having a vinylidene chloride interpolymer heat-sealable layer thereon and on the opposite surface of the substrate a further primer layer comprising a mixture of polyethyleneimine and an epoxy resin containing polydiallyldimethylammonium chloride therein and having an acrylic polymer heat-sealable layer thereon.